# EUROPÄISCHE PATENTSCHRIFT

(11) **EP 2 617 591 B1**
(45) Veröffentlichungstag und Bekanntmachung des Hinweises auf die Patenterteilung: **04.07.2018**
(21) Anmeldenummer: 12007277.2
(22) Anmeldetag: 23.10.2012
(51) Int. Cl.: B60J 5/06

(54) **Fahrzeugaufbau für Nutzfahrzeuge**
Vehicle body for commercial vehicles
Structure de véhicule pour véhicules utilitaires

(30) Priorität: 18.01.2012 DE 102012000843
(43) Veröffentlichungstag der Anmeldung: 24.07.2013
(73) Patentinhaber: Fahrzeugwerk Bernard Krone GmbH, 48480 Spelle (DE)
(72) Erfinder: Irion, Manfred, 49757 Werlte (DE)
(74) Vertreter: Pott, Ulrich

(56) Entgegenhaltungen:
- EP-A1- 1 407 912
- EP-A1- 2 151 372
- FR-A1- 2 688 463
- GB-A- 2 310 202

## Beschreibung

Die Erfindung bezieht auf einen Fahrzeugaufbau für Nutzfahrzeuge in einer Ausbildung gemäß dem Oberbegriff des Patentanspruches 1.

Ein Nutzfahrzeugaufbau der vorgenannten Art ist aus der EP 1 407 912 bekannt. Dieser Nutzfahrzeugaufbau ist höhenveränderbar ausgebildet, um unterschiedliche Laderauminnenhöhen berücksichtigen zu können in Ansehung einer maximal zulässigen Fahrzeughöhe. So kann über eine Hubeinrichtung und Eckstützen das Dach des Fahrzeugaufbaus angehoben werden. Dazu sind auch Seitenplanen dieser veränderten Laderauminnenhöhe anzupassen, wozu in der vorgenannten Druckschrift jedoch keine Gestaltungsvorschläge gemacht sind. Eine solche Seitenplane ist jedoch aus der FR 2 688 463 A1 bekannt. Es ist Aufgabe der vorliegenden Erfindung, einen zollverschlussfähigen Fahrzeugaufbau mit einer Seitenplane zu schaffen, die in baulich einfacher Weise bei Veränderung der Laderauminnenhöhe dieser angepasst werden kann.

Zur Lösung dieser Aufgabe zeichnet der Fahrzeugaufbau der eingangs genannten Art durch die im kennzeichnenden Teil des Anspruchs 1 angegebenen Merkmale aus. Hinsichtlich wesentlicher vorteilhafter Ausgestaltungen wird auf die Ansprüche 2 bis 10 verwiesen.

Damit ist ein Fahrzeugaufbau für Nutzfahrzeuge zur Verfügung gestellt, bei dem über den unteren Planenabschnitt der Seitenplane mit seinen Planenösen und dem oberen Planenabschnitt mit seinen Planenösen sowohl eine untere Fahrhöhengesamteinstellung als auch eine obere Fahrhöhengesamteinstellung der Seitenplane vorgenommen werden kann, ohne dass am Fahrzeugaufbau kosten-und bauaufwändige Verstellmechanismen vorzusehen sind. In der unteren Fahrgesamthöheneinstellung ist der untere hintere Planenabschnitt hochgeklappt bzw. eingefaltet und liegt an der Innenfläche der Seitenplane so an, dass die Planenösen des oberen vorderen Planenabschnittes von z.B. Planenbefestigern, die an einer Bordwand vorgesehen sind, durchgriffen werden können. Ist das Dach anzuheben, so dass die Seitenplane dieser erhöhten Laderauminnenhöhe zu folgen hat, kann der untere hintere Planenabschnitt abgeklappt bzw. entfaltet werden, so dass er mit Höhenabstand beabstandet zu der Reihe der Planenösen des oberen vorderen Planenabschnittes zu liegen kommt und somit mit den Planenbefestigern zusammenwirken kann, so dass eine obere Fahrgesamthöheneinstellung der Seitenplane vorzunehmen ist. In beiden Fahrgesamthöheneinstellungen ist die Seitenplane selbstverständlich wie herkömmlich über übliche Spannvorrichtungen zu spannen. Dazu kann an den vorderen Planenabschnitten ein Keder vorgesehen sein, der in eine entsprechende Nutausnehmung einer Spannvorrichtung einzuführen ist, so dass auch die vorderen Planenabschnitte gespannt werden können. In allen einstellbaren Gesamtfahrhöhen werden die gesetzlichen Bestimmungen von "Zollübereinkommen über den internationalen Warentransport mit Carnets TIR" eingehalten. Die bei Seitenplanen üblichen Funktionen wie Öffnen durch seitliches Schieben der Seitenplane in und entgegen der Längsrichtung des Fahrzeuges sind weiterhin möglich.

Bevorzugterweise ist ein Planenlatz vorzusehen, an dem sowohl der obere als auch der untere Planenabschnitt ausgebildet ist. Dieser kann so ausgebildet sein, dass dieser Planenlatz zweilagig ausgebildet ist, wobei eine erste Lage, vorzugsweise die äußere Lage, den oberen Planenabschnitt bildet mit jeweiligen Seitenbereichen, zwischen denen eine fensterartige Ausnehmung ausgebildet ist. Hinter diesem äußeren Planenabschnitt des Planenlatzes ist eine hintere, d.h. zum Laderaum hin ausgerichtete Lage vorgesehen, die den unteren Planenabschnitt ausbildet, so dass dieser im entfalteten bzw. abgeklappten Zustand hinter dem ersten Planenabschnitt gelegen ist und sich über die fensterartige Ausnehmung legt.

Ist der Planenlatz mit den seitlichen Bereichen ausgebildet, hinterlegt der untere entfaltete Planenabschnitt somit sowohl den oberen Planenabschnitt als auch zumindest bereichsweise die jeweiligen Seitenbereiche. Sind an den Seitenbereichen die Keder ausgebildet, ist die Seitenplane über diese Seitenbereiche zu den jeweiligen Außenseiten hin zu spannen. Im abgeklappten Zustand werden die Planenösen des oberen Planenabschnitts durch die hintere Schicht, also den unteren Planenabschnitt, zum Laderaum hin und somit nach innen hin überdeckt und mithin verschlossen, so dass auch Schmutz und Feuchtigkeit von außen durch die Planenösen nicht in den Laderaum eindringen kann. Zudem sind durch das Abdecken der Planenösen des vorderen Planenlatzes die Bestimmungen des Zollübereinkommens (TIR) erfüllt.

Bevorzugterweise ist der Planenlatz mit seinen beiden Schichten über eine Schweißnaht mit dem Hauptseitenplanenbereich, der sich an diesen Planenlatz anschließt, verbunden, wobei auch diese Schweißnaht die Einfaltbarkeit bzw. die Verschwenkbarkeit des unteren Planenabschnittes aufgrund des flexiblen Materials der Schweißnaht und des Planenmaterials ermöglicht. Im eingefalteten Zustand kann der untere Planenabschnitt durch Befestigungs- bzw. Fixiermittel, beispielsweise Klebe- und/oder Klettstreifen, an der Innenfläche der Seitenplane fixiert werden. Dies kann auch z.B. in Seitenbereichen des Planenlatzes erfolgen, wenn der untere Planenabschnitt nach unten in seine Betriebsstellung überführt wird. In beiden Fällen, d.h. in der oberen Fahrgesamthöheneinstellung als auch in der unteren Fahrgesamthöheneinstellung, können über die Planenösen und die Planenbefestiger auch Planenseile, die z.B. als Zollsicherung benutzt werden, vorgesehen werden.

Zur weiteren Erläuterung der Erfindung wird auf die nachfolgende Beschreibung und die Zeichnung verwiesen. In der Zeichnung zeigen:

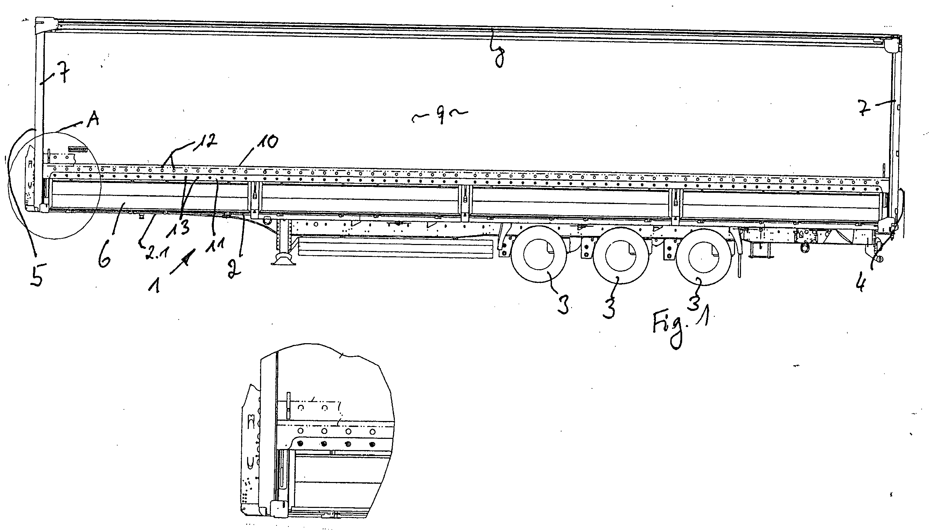

- Fig. 1: ein Ausführungsbeispiel eines Nutzfahrzeuges in Gestalt eines Sattelaufliegers mit einem Ausführungsbeispiel eines Fahrzeugaufbaus nach der Erfindung in einer Seitenansicht;
- Fig. 2: eine vergrößerte Teildarstellung gemäß dem Detail "A" in Fig. 1 mit einer Einstellung der Plane in einer unteren Fahrhöheneinstellung;
- Fig. 3: eine vergrößerte Darstellung des Details "III" in Fig. 2;
- Fig. 4: das Detail "A" in Fig. 1 in einer perspektivischen Teildarstellung in einer Einstellung der Seitenplane in einer oberen Fahrgesamthöheneinstellung, und
- Fig. 5: vergrößert das Detail "V" in Fig. 4.

In der Zeichnung sind grundsätzlich übereinstimmende Teile mit übereinstimmenden Bezugsziffern versehen. Allgemein mit 1 ist in der Zeichnung das Nutzfahrzeug mit einem Fahrgestell 2, Rädern 3, Hecktüren 4, einer Vorderwand 5 und Seitenbordwänden 6 beziffert. An höhenverstellbaren Eckstützen 7 ist ein Dach 8 abgestützt. An dem Fahrgestell 2 ist ein Laderaumboden 2.1 abgestützt. Der oberhalb des Laderaumbodens 2.1 gelegene Laderaum ist seitlich durch eine Seitenplane 9 begrenzt, die zum Beladen und Entladen des Nutzfahrzeuges in Richtung der Vorderwand 5 oder zu den Hecktüren 4 gardinenartig zu verschieben ist. Über eine nicht näher gezeigte Hubeinrichtung sind die Eckstützen 7 und das Dach 8 höhenveränderlich ausgebildet.

Um einer Höhenverstellung des Daches 8 und der Eckstützen 7 folgen zu können, hat die Seitenplane 9 einen oberen Planenabschnitt 10 und einen unteren Planenabschnitt 11 mit jeweiligen Planenösen 12 (oberer Planenabschnitt 10) bzw. Planen-ösen 13 (unterer Planenabschnitt 11).

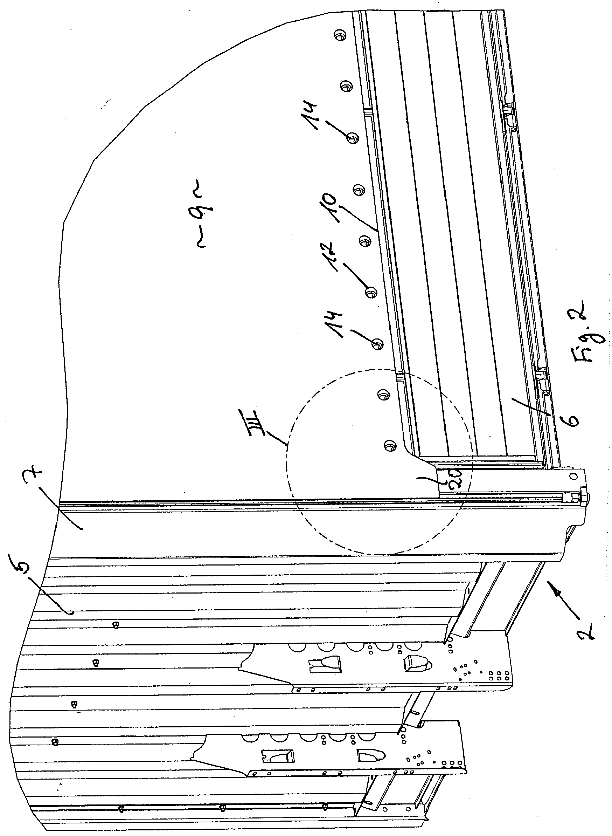

In der Fig. 2 ist die Seitenplaneneinstellung für eine untere Fahrgesamthöheneinstellung vergrößert dargestellt, so dass die Planenösen 12 des oberen Planenabschnittes 10 zum Einsatz kommen. Diese sind in dem Ausführungsbeispiel als runde Planenösen ausgebildet und werden von Planenbefestigern 14 durchgriffen, so dass ein Planensicherungsseil diese durchgreifen kann.

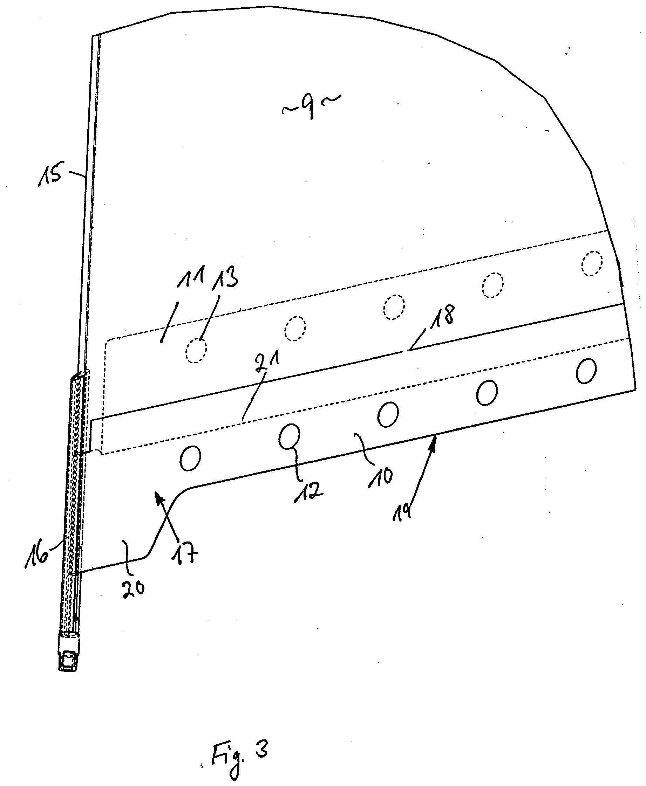

Die nähere Gestaltung des Planenabschnittes 10 bzw. die nähere Gestaltung der Seitenplane 9 in der unteren Fahrgesamthöheneinstellung ist aus Fig. 3 ersichtlich. Die Seitenplane 9 ist mit einem seitlichen Keder 15 versehen, der in eine Nut eines Spannrohres 16 eingreift, worüber die Seitenplane 9 zu spannen ist. Im unteren Bereich schließt sich ein insgesamt mit 17 bezifferter Planenlatz an, an dem der obere Planenabschnitt 10 und der untere Planenabschnitt 11 ausgebildet ist. Der Planenlatz 17 ist zumindest bereichsweise zweilagig ausgebildet und besteht aus einer nach außen hin gerichteten äußeren Planenschicht, die den oberen Planenabschnitt 11 bildet. Der Planenlatz 17 ist über eine außenliegende Schweißnaht 18 mit dem unteren Randbereich des Hauptplanenbereiches der Seitenplane 9 verschweißt. Dieser Planenlatz 17 bildet ein allgemein mit 19 beziffertes Planenfenster aus, und zwar in dem Bereich, der sich an den oberen Planenabschnitt 10 anschließt. Dieses Planenfenster 19 ist jeweils seitlich, d.h. zu beiden Außenseiten, von einem Seitenbereich 20 begrenzt, der bis zu dem unteren Rand des vorderen Planenlatzes 17 reicht, und an dem wiederum Keder ausgebildet sind, die in dem gezeigten Ausführungsbeispiel nach Fig. 3 nicht ersichtlich sind, da diese in das Spannrohr 16 eingeführt sind. Somit ist sichergestellt, dass über die gesamte Höhe der Seitenplane 9 Keder zum Spannen der Plane vorhanden sind, wobei der Keder an der Faltlinie 24 getrennt ist und unterhalb der Faltlinie 24 der Keder nur am vorderen Planenlatz 17 angebracht ist.

Der obere Planenabschnitt 11 wird nach oben gefaltet bzw. hochgeklappt. Er bildet die innere Schicht des doppellagigen Planenlatzes 17 und liegt mithin im hochgeklappten bzw. eingefalteten Zustand hinter der Seitenplane 9, also an deren Innenfläche, die zum Laderaum des Fahrzeugaufbaus hin weist. In diesem hochgeklappten bzw. eingefalteten Zustand kann der untere hintere Planenabschnitt 11 an der Innenfläche durch Befestigungsmittel, wie beispielsweise Klebe- oder Klettstreifen an der Seitenplane 9 befestigt sein. In diesem Zustand der Seitenplane 9 gemäß der Darstellung nach Fig. 3 kann die untere Fahrgesamthöheneinstellung vorgenommen werden und zwar, indem die Planenösen 12 des oberen Planenabschnittes 10 wirksam werden und mit den Planenbefestigern 14 des Fahrgestells 2 bzw. einer Außenbordwand 6 zusammenwirken. Der untere Planenabschnitt 11 ist auch faltbar bzw. klappbar. Der obere vordere Planenlatz 17 ist durch eine von außen her sichtbare Schweißnaht 18 oder ähnliche Verbindung mit der Seitenplane 9 verbunden.

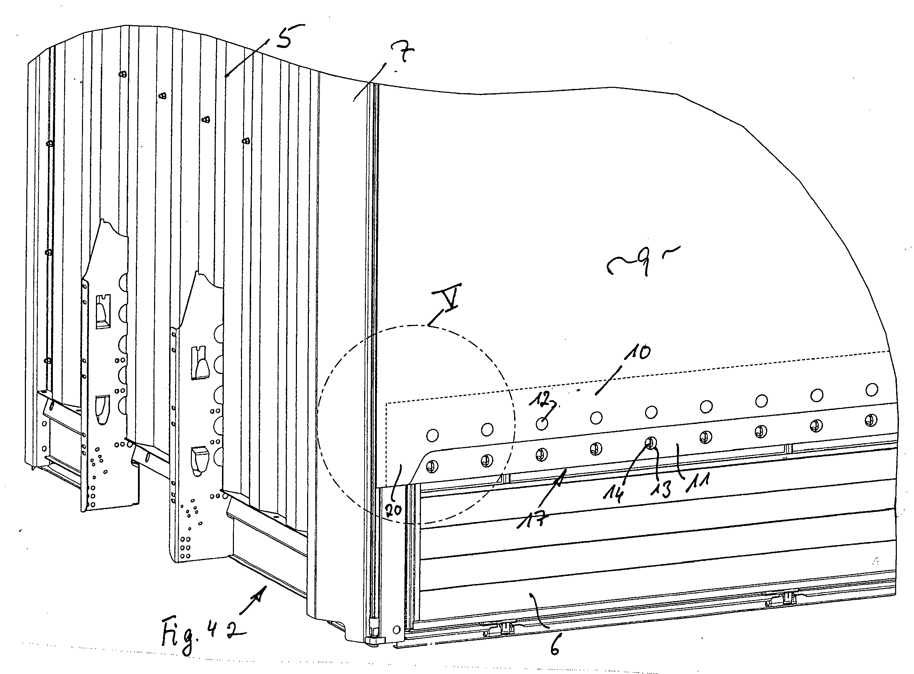

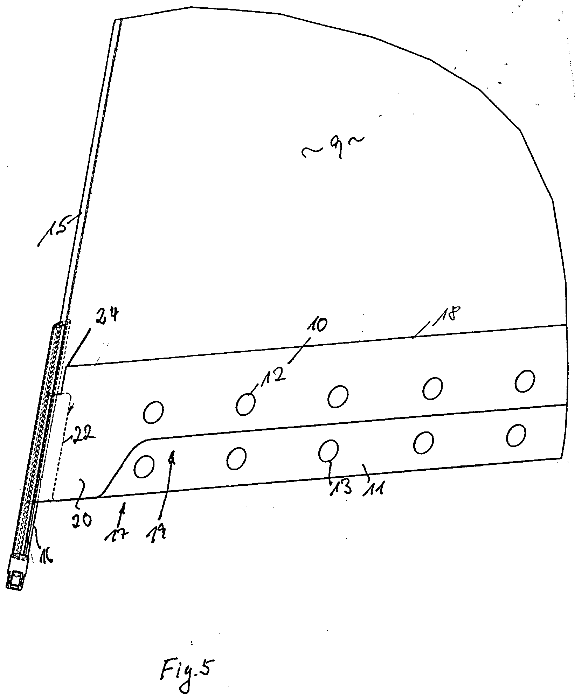

In der Fig. 4 ist die Seitenplane 9 ersichtlich, wie sie sich darstellt, wenn eine Planeneinstellung für eine obere Fahrhöheneinstellung vorgenommen werden soll, also die Vertikalstützen 7 und das Dach 8 in eine nach oben hin verfahrene Position gebracht worden sind, um eine größere Laderaumhöhe unter Berücksichtigung der maximal möglichen Aufbauhöhe realisiert zu haben. Der untere Planenabschnitt 11 mit seinen Planenösen 13 ist nun wirksam, in welchen die Planenösenbefestiger 14 jetzt angeordnet sind. Aus der vergrößerten Darstellung nach Fig. 5 geht hervor, dass der untere hintere Planenabschnitt 11 nach unten abgeklappt bzw. herabgefaltet wurde und zwar aus seiner inneren an der Innenfläche der Seitenplanung 9 gelegenen Lage (siehe Fig. 3), so dass er von innen die Planenösen 12 des oberen vorderen Planenabschnitts 10 abdeckt und das Fenster 19 in dem Planenlatz 17 ausfüllt. Der obere vordere Planenlatz 18 wird durch den dort angebrachten Keder gespannt.

Es ist auch die Kante 22 des hinteren unteren Planenabschnittes 11 angedeutet. Da die unterhalb der Planenösen 12 des oberen vorderen Planenabschnittes 10 gelegenen Planenösen 13 des unteren hinteren Planenabschnittes 11 wirksam sind, kann die obere Fahrgesamteinstellungshöhe mit dieser Seitenplaneneinstellung vorgenommen werden.

Der bauliche Aufwand für diese Art der Seitenplanenausbildung auf Fahrzeugaufbauten ist einfach und mithin kostengünstig, so dass mit baulich einfachen Mitteln unterschiedliche Fahrhöheneinstellungen vorzunehmen sind.

## Patentansprüche

1. Fahrzeugaufbau (1) für Nutzfahrzeuge, insbesondere für Sattelauflieger, mit einem auf einem Fahrgestell (2) abgestützten Laderaumboden (2.1) sowie mit einem sich oberhalb des Laderaumboden (2.1) erstreckenden, von zumindest einer Seitenplane (9) bereichsweise umgrenzten Laderaum mit einem Dach (8), welches sich auf höhenveränderbaren Eckstützen (7) abstützt, **dadurch gekennzeichnet, dass** die Seitenplane (9) für eine unterschiedliche Höheneinstellung des Daches (8) und der Eckstützen (7) zumindest zwei benachbarte Planenabschnitte (10,11) mit jeweiligen Planenösen (12, 13) zur Anordnung einer Planenbefestigung (14) aufweist, wobei die Planenösen (12, 13) der Planenabschnitte (10, 11) wählbar zur Seitenplanenbefestigung nutzbar sind und wobei bei der Auswahl der Planenösen (12) eines oberen Planenabschnittes (10) der benachbarte untere Planenabschnitt (11) mit seinen Planenösen (13) hochgeklappt und an der zum Laderaum hin gewandten Innenfläche der Seitenplane (9) ablegbar ist.

2. Fahrzeugaufbau nach Anspruch 1, **dadurch gekennzeichnet, dass** der untere Planenabschnitt (11) derart an einem benachbarten Planenbereich befestigt ist, dass er sich in seiner hochgeklappten Außerbetriebsstellung an der Innenwandung unter Freilassung der Planenösen (12) des oberen Planenabschnittes (10) an der Seitenplane (9) anlegt und dort fixierbar ist.

3. Fahrzeugaufbau nach Anspruch 1 oder 2, **dadurch gekennzeichnet, dass** der untere Planenabschnitt (11) in seiner herabgeklappten Betriebsstellung die Planenöse (12) des oberen Planenabschnittes (10) von innen abdeckt.

4. Fahrzeugaufbau nach einem der Ansprüche 1 bis 3, **dadurch gekennzeichnet, dass** an einem Hauptseitenplanenbereich ein Planenlatz (17) befestigt ist, der den oberen Planenabschnitt (10) und den unteren Planenabschnitt (11) aufweist.

5. Fahrzeugaufbau nach Anspruch 4, **dadurch gekennzeichnet,** der Planenlatz (17) zweilagig ausgebildet ist mit einer ersten Lage, die den oberen Planenabschnitt (10) ausbildet und einer zweiten Planenschicht, die den unteren Planenabschnitt (11) aufweist, wobei der untere Planenabschnitt (11) hinter dem oberen Planenabschnitt (10) gelegen ist.

6. Fahrzeugaufbau nach Anspruche 4 oder 5, **dadurch gekennzeichnet, dass** sich der obere Planenabschnitt (10) in seinen jeweils rechts und links neben den Planenösen (12) gelegenen Seitenbereichen (20) bis an eine Unterkante des unteren Planenabschnittes (13) in dessen herabklappbarer Betriebsstellung erstreckt.

7. Fahrzeugaufbau nach einem der Ansprüche 4 bis 6, **dadurch gekennzeichnet, dass** der Planenlatz (17) mit dem angrenzenden Hauptseitenplanenbereich über eine Schweißnaht (18) verbunden ist.

8. Fahrzeugaufbau nach einem der Ansprüche 4 bis 7, **dadurch gekennzeichnet, dass** der untere Planenabschnitt (11) des Planenlatzes (17) einstückig mit der Seitenplane 9 ausgebildet ist.

9. Fahrzeugaufbau nach einem der Ansprüche 1 bis 8, **dadurch gekennzeichnet, dass** der untere Planenbereich (11) die Seitenbereiche (20) des oberen Planenabschnittes (10) in seiner Betriebsstellung zumindest bereichsweise nach innen hin überlappt.

10. Fahrzeugaufbau nach einem der Ansprüche 1 bis 9, **dadurch gekennzeichnet, dass** die Planenösen (12, 13) eine runde oder ovale Planenösengestalt haben.

## Claims

1. Vehicle body (1) for commercial vehicles, in particular for semitrailers, comprising a cargo space floor (2.1), supported on a chassis (2), and comprising a cargo space which extends above the cargo space floor (2.1), is delimited, in regions, by at least one side tarpaulin (9) and has a roof (8) which is supported on height-adjustable corner posts (7),
**characterised in that**, for variable height-adjustment of the roof (8) and the corner posts (7), the side tarpaulin (9) comprises at least two adjacent tarpaulin portions (10, 11), each having tarpaulin eyelets (12, 13) for arranging a tarpaulin fastening means (14),
it being possible for the tarpaulin eyelets (12, 13) of the tarpaulin portions (10, 11) to be selectively used for fastening the side tarpaulin,
and, when the tarpaulin eyelets (12) of an upper tarpaulin portion (10) are selected, it being possible for the adjacent lower tarpaulin portion (11) to be folded up by means of its tarpaulin eyelets (13) and to be bent back against the inner face of the side tarpaulin (9) facing the cargo space.

2. Vehicle body according to claim 1, **characterised in that** the lower tarpaulin portion (11) is fastened to an adjacent tarpaulin region in such a way that said lower tarpaulin portion, when in its folded-up non-operational position against the inner wall, rests against the side tarpaulin (9) while releasing the tarpaulin eyelets (12) of the upper tarpaulin portion (10), and can be fixed there.

3. Vehicle body according to either claim 1 or claim 2, **characterised in that** the lower tarpaulin portion (11) covers the tarpaulin eyelets (12) of the upper tarpaulin portion (10) from the inside when said lower tarpaulin portion is in its folded-down operational position.

4. Vehicle body according to any of claims 1 to 3, **characterised in that** a tarpaulin flap (17) is fastened to a main side tarpaulin region and comprises the upper tarpaulin portion (10) and the lower tarpaulin portion (11).

5. Vehicle body according to claim 4, **characterised in that** the tarpaulin flap (17) has two layers, a first layer which forms the upper tarpaulin portion (10) and a second tarpaulin layer which forms the lower tarpaulin portion (11), the lower tarpaulin portion (11) lying behind the upper tarpaulin portion (10).

6. Vehicle body according to either claim 4 or claim 5, **characterised in that** the side regions (20) of the upper tarpaulin portion (10), which regions are located in each case to the right and left next to the tarpaulin eyelets (12), extend as far as a lower edge of the lower tarpaulin portion (13) in the downwardly foldable operational position thereof.

7. Vehicle body according to any of claims 4 to 6, **characterised in that** the tarpaulin flap (17) is connected to the adjacent main side tarpaulin region by means of a weld seam (18).

8. Vehicle body according to any of claims 4 to 7, **characterised in that** the lower tarpaulin portion (11) of the tarpaulin flap (17) is formed in one piece with the side tarpaulin (9).

9. Vehicle body according to any of claims 1 to 8, **characterised in that** the lower tarpaulin region (11) overlaps the side regions (20) of the upper tarpaulin portion (10) on the inside, at least in regions, when the lower tarpaulin region is in the operational position thereof.

10. Vehicle body according to any of claims 1 to 9, **characterised in that** the tarpaulin eyelets (12, 13) are round or oval tarpaulin eyelets.

## Revendications

1. Carrosserie de véhicule (1) pour véhicules utilitaires, en particulier pour semi-remorque, comprenant un plancher d'espace de chargement (2.1), supporté par un mécanisme de roulement (2), et un espace de chargement, pourvu d'un toit (8), qui s'étend au-dessus du plancher d'espace de chargement (2.1) et qui entoure par endroits au moins une bâche latérale (9), lequel toit est supporté par des montants d'angle (7) réglables en hauteur, **caractérisée en ce que** la bâche latérale (9) comporte, pour un réglage en hauteur différent du toit (8) et des montants d'angle (7), au moins deux parties de bâche adjacentes (10, 11) pourvues d'oeillets de bâche respectifs (12, 13) destinés à disposer une fixation de bâche (14), les oeillets de bâche (12, 13) des parties de bâche (10, 11) pour être utilisés de manière sélectives pour fixer la bâche latérale et, lors de la sélection des oeillets de bâche (12) d'une partie de bâche supérieure (10), la partie de bâche inférieure adjacente (11) munie de ses oeillets de bâche (13) étant relevée et pouvant être appliquée sur la surface intérieure, tournée vers l'espace de chargement, de la bâche latérale (9).

2. Carrosserie de véhicule selon la revendication 1, **caractérisée en ce que** la partie de bâche inférieure (11) est fixée à une surface de bâche adjacente de manière à s'appliquer, dans sa position hors fonctionnement relevée sur la paroi intérieure, sur la bâche latérale (9), et de manière à y être fixé, tout en laissant libres les oeillets de bâche (12) de la partie de bâche supérieure (10).

3. Carrosserie de véhicule selon la revendication 1 ou 2, **caractérisée en ce que** la partie de bâche inférieure (11) recouvre depuis l'intérieur, dans sa position rabattue, les oeillets de bâche (12) de la partie de bâche supérieure (10).

4. Carrosserie de véhicule selon l'une des revendications 1 à 3, **caractérisée en ce que** un pan de bâche (17) est fixé à une zone de bâche latérale supérieure, lequel pan de bâche comporte la partie de bâche supérieure (10) et la partie de bâche inférieure (11).

5. Carrosserie de véhicule selon la revendication 4, **caractérisé en ce que** le pan de bâche (17) formée en deux couches dont une première couche forme la partie de bâche supérieure (10) et dont une seconde couche de bâche comporte la partie de bâche inférieure (11), ladite partie de bâche inférieure (11) est située derrière la partie de bâche supérieure (10).

6. Carrosserie de véhicule selon les revendications 4 ou 5, **caractérisée en ce que** la partie de bâche supérieure (10) s'étend, dans ses zones latérales (20) situées à droite et à gauche à côté des oeillets de bâche (12), jusqu'à un bord inférieur de la partie de bâche inférieure (13) dans sa position de fonctionnement rabaissée.

7. Carrosserie de véhicule selon l'une des revendications 4 à 6, **caractérisée en ce que** le pan de bâche (17) est relié à la zone de bâche latérale principale adjacente par le biais d'un cordon de soudure (18).

8. Carrosserie de véhicule selon l'une des revendications 4 à 7, **caractérisée en ce que** la partie de bâche inférieure (11) du pan de bâche (17) est formée d'une seule pièce avec la bâche latérale (9).

9. Carrosserie de véhicule selon l'une des revendications 1 à 8, **caractérisée en ce que** la zone de bâche inférieure (11) chevauche au moins partiellement vers l'intérieur les zones latérales (20) de la partie de bâche supérieure (10) dans sa position de fonctionnement.

10. Carrosserie de véhicule selon l'une des revendications 1 à 9, **caractérisée en ce que** les oeillets de bâche (12, 13) ont une forme ronde ou ovale.
